# EUROPEAN PATENT SPECIFICATION

(11) **EP 1 252 782 B1**
(45) Date of publication and mention of the grant of the patent: **08.09.2004**
(21) Application number: 01903462.8
(22) Date of filing: 31.01.2001
(51) Int. Cl.: H04Q 7/30

(54) **SYSTEM AND METHOD FOR WIRELESS CONNECTION TO BASE STATION EXTERNAL EQUIPMENT**
SYSTEM UND VERFAHREN ZUR SCHNURLOSEN VERBINDUNG ZWISCHEN BASISSTATION UND EXTERNEN GERÄTEN
SYSTEME ET PROCEDE POUR RADIOCONNEXION AVEC UNE INSTALLATION EXTERIEURE DE STATION DE BASE

(30) Priority: 03.02.2000 US 497842
(43) Date of publication of application: 30.10.2002
(73) Proprietor: Ericsson Inc., Plano, TX 75024 (US)
(72) Inventor: BHATIA, Ranjit, Plano, TX 75025 (US); FELTNER, Charles, M., Plano, TX 75025 (US)
(74) Representative: Sjöberg, Mats Hakan
(86) International application number: PCT/US2001/003233
(87) International publication number: WO 2001/058181

(56) References cited:
- EP-A- 0 440 081
- EP-A- 0 756 392
- US-A- 5 809 395

## Description

### BACKGROUND OF THE PRESENT INVENTION

### Field of the Invention

The present invention relates generally to cellular telecommunications systems and methods, and specifically to base station systems.

### Background of the Present Invention

Cellular telecommunications is one of the fastest growing and most demanding telecommunications applications. Today it represents a large and continuously increasing percentage of all new telephone subscriptions around the world. One prominent standard for cellular telecommunications systems is the Global System for Mobile Communication (GSM) digital mobile cellular radio system.

A typical GSM network includes both a switching system and a base station system. The switching system is made up essentially of a Mobile Services Switching Center (MSC), which controls calls to and from other telephony and data communications systems, and a Home Location Register (HLR) and Visitor Location Register (VLR), which store subscriber information associated with mobile stations (MS's) within the MSC area.

The base station system includes a Base Transceiver Station (BTS), which is the physical equipment that provides radio coverage to the cell for which it is responsible, and a Base Station Controller (BSC), which controls the functions of the BTS, such as handover and channel assignment.

The BTS further includes both internal equipment, such as one or more Transceiver Units (TRU's), and external equipment, such as one or more Active Antennas (AA's). Currently, the external equipment is connected to the BTS through cables or buses. Therefore, in order for the BTS to function properly, the BTS must have a number of ports (or other type of connector) to connect to all of the external devices. The installation of all of these cables and buses can be cumbersome and time consuming. In addition, the number of external devices that can be connected to the BTS is limited by the number of ports that the BTS has and the type of buses that the BTS supports. Such a base station is known from EP 756392.

Furthermore, the BTS typically uses a different protocol to communicate with each of the external equipment and devices. Thus, the external equipment can only be connected to the BTS if both the BTS and the external equipment support the same protocol. For micro BTS's, it becomes even more difficult to support all the needed interfaces (connectors and protocols) to connect to external equipment, while still being micro in size. There is, therefore, a need for a BTS to support multiple external devices, each with a different protocol, without expensive installation costs or extensive modifications to the BTS.

### SUMMARY OF THE INVENTION

The present invention is directed to telecommunications systems and methods for connecting external devices wirelessly to the BTS via a short range, ad-hoc network, such as the Bluetooth network in accordance with claims 1, 9 and 18. Bluetooth was developed to be a cable replacement between portable and/or fixed electronic devices, and operates in the unlicensed ISM band at 2.4 GHz. To communicate wirelessly with the external equipment, the BTS includes a Bluetooth compatible transceiver (TRX) for interfacing with the external equipment and sending and receiving signals on the physical layer and a Bluetooth adapter for converting the signals on the physical interface to the signals used by the higher layers. The Bluetooth adapter is also responsible for determining the address of each Bluetooth capable external equipment connected to the BTS and the type of equipment (protocol) it is. Each of the Bluetooth compatible external devices also have Bluetooth TRX's and adapters therein. To communicate with the BSC, the BTS further includes a network adapter for converting messages received from the Bluetooth capable external equipment to the proper message for the BSC. Advantageously, by connecting the external equipment wirelessly to the BTS, the BTS is capable of supporting multiple external equipment with ease of installation and reduced cost.

### BRIEF DESCRIPTION OF THE DRAWINGS

The disclosed invention will be described with reference to the accompanying drawings, which show important sample embodiments of the invention and which are incorporated in the specification hereof by reference, wherein:
FIGURE 1 is a block diagram of a conventional base station system;
FIGURE 2 is a block diagram of a base transceiver station in wireless communication with external devices, in accordance with preferred embodiments of the present invention; and
FIGURES 3A and 3B are signaling diagrams illustrating communication between the base transceiver station and an external device.

### DETAILED DESCRIPTION OF THE PRESENTLY PREFERRED EXEMPLARY EMBODIMENTS

The numerous innovative teachings of the present application will be described with particular reference to the presently preferred exemplary embodiments. However, it should be understood that this class of embodiments provides only a few examples of the many advantageous uses of the innovative teachings herein. In general, statements made in the specification of the present application do not necessarily delimit any of the various claimed inventions. Moreover, some statements may apply to some inventive features but not to others.

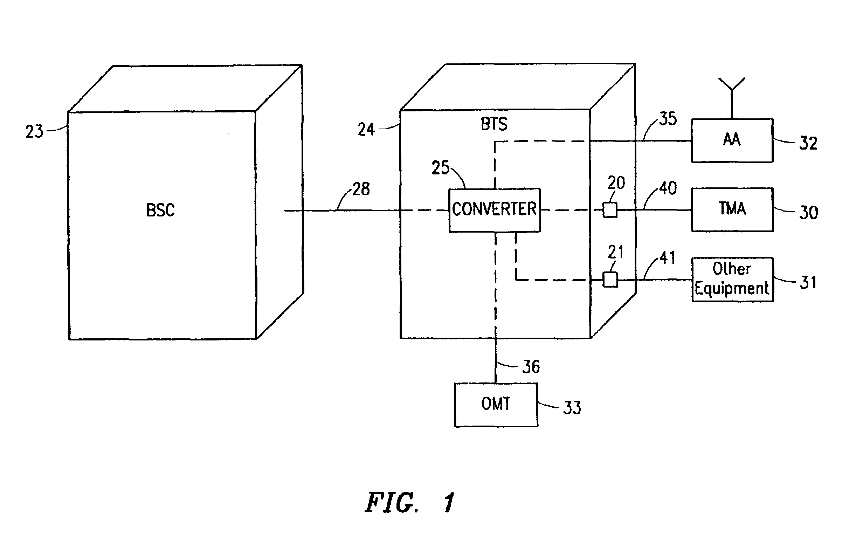

As shown in FIGURE 1, conventionally, a Base Transceiver Station (BTS) 24 is connected to external equipment, such as a Tower Mounted Amplifier (TMA) 30 or other equipment 31 via a respective cable 40 and 41 to a respective port 20 and 21 on the BTS 24. Similarly, the BTS 24 is connected to external devices, such as one or more Active Antennas (AA's) 32 or an Operation and Maintenance Terminal (OMT) 33 via buses 35 and 36, respectively, to the BTS 24.

To communicate with each of the external equipment and external devices 30-33 (hereinafter referred to collectively as external devices), the BTS 24 typically uses a different protocol to for each of the external devices 30-33. Thus, a converter 25 within the BTS 24 converts between the protocol used by the external devices 30-33 and the protocol used by an interface 28 to a Base Station Controller (BSC) 23 controlling the BTS 24. The interface 28 to the BSC 23 varies depending upon the type of cellular network. For example, in the Global System for Mobile Communications (GSM) network, the interface 28 between the BSC 23 and the BTS 24 is known as the Abis interface. In the Universal Mobile Telecommunications System (UMTS) network, the interface 28 between the BSC 23 (referred to as the Radio Network Controller) and the BTS 24 (referred to as the base station) is known as the Iub interface.

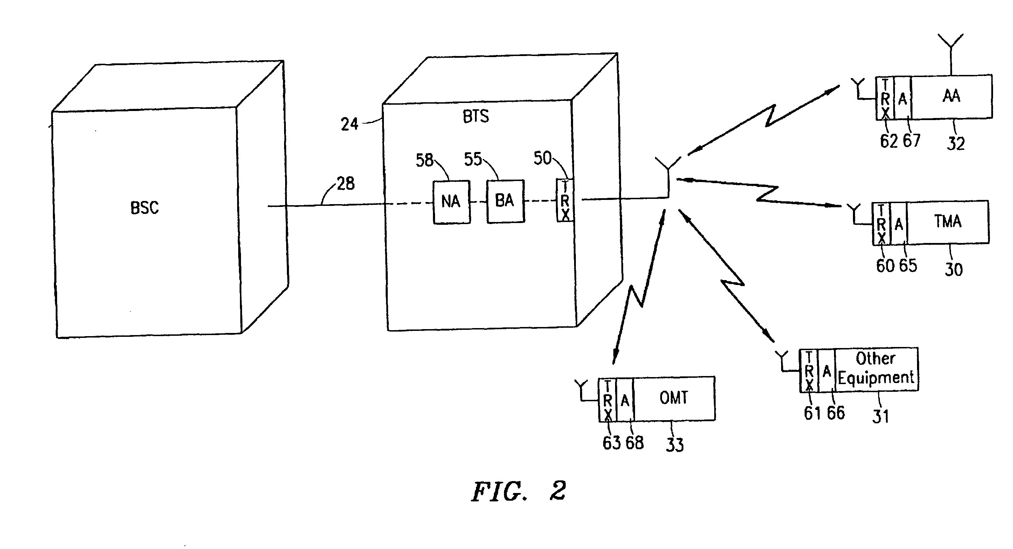

With reference now to FIGURE 2 of the drawings, in accordance with embodiments of the present invention, in order to allow multiple external devices 30-33 to be connected to the BTS 24 without extensive cables or buses and without necessitating different protocol conversions for each external device 30-33, each of the external devices 30-33 can be wirelessly connected to the BTS 24 through the use of a short range, ad-hoc network, such as the Bluetooth network. Bluetooth is a universal radio interface in the 2.4 GHz frequency band that enables electronic devices to connect and communicate wirelessly. The Bluetooth system provides a point-to-point connection or a point-to-multipoint connection, with each device being able to communicate simultaneously with up to seven other devices.

To implement the Bluetooth network for remote communication between the BTS 24 and the external devices 30-33, the BTS 24 must have a Bluetooth compatible transceiver (TRX) 50 and a Bluetooth adapter 55. The Bluetooth compatible TRX 50 interfaces with the external devices 30-33 to send and receive messages on the physical layer. The Bluetooth adapter 55 converts the messages sent and received on the physical interface into messages used by the higher layers. In addition, the Bluetooth adapter 55 is responsible for determining the address of each of the external devices 30-33 wirelessly connected to the BTS 24 and the type of device 30-33 it is.

To communicate with the BSC 23, the BTS 24 further includes a network adapter 58 for converting messages received from the external devices 30-33 at the Bluetooth adapter 55 to the proper (Abis or Iub) message for the interface 28 to the BSC 23, and vice-versa. Thus, the network adapter 58 converts between protocols for communicating with the BSC 23 and protocols for communicating with the Bluetooth TRX 50. Likewise, to communicate with the BTS 24, each of the external devices 30-33 also has a Bluetooth TRX 60-63, respectively, as well as the necessary Bluetooth adapter 65-68, respectively, for the respective external devices 30-33.

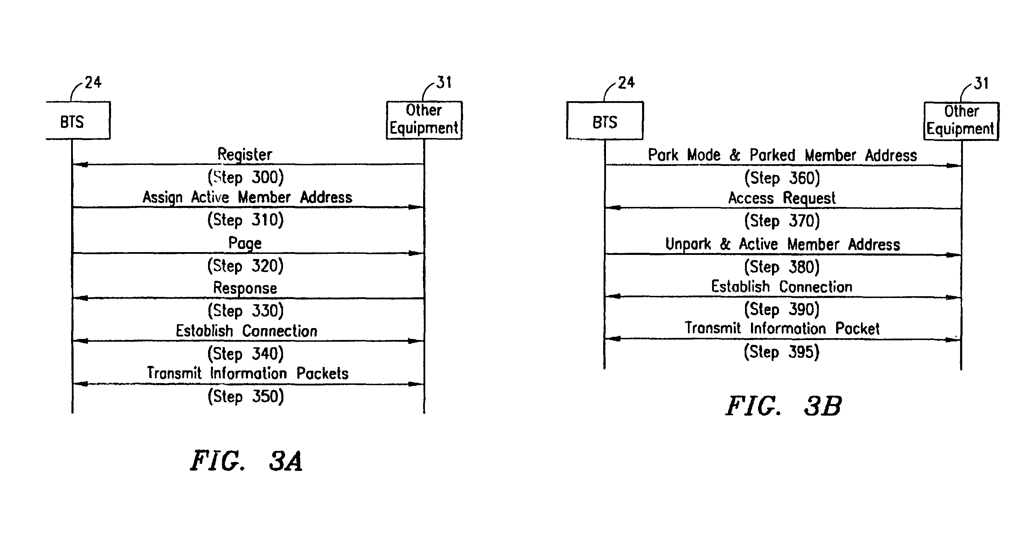

With reference now to FIGURE 3A of the drawings, which will be described in connection with FIGURE 2 of the drawings, sample signaling is shown between the BTS 24 a particular external device, such as a new external device 31. Once the new external device 31 has been fitted with a Bluetooth TRX 61 and the appropriate Bluetooth adapter 66, the external device 31 can register with the BTS 24 by providing a unique 48-bit Bluetooth device address to the BTS 24 (step 300). Thereafter, the BTS 24 assigns an active member address, which is typically a 3-bit address, to the external device 31 (step 310).

In the Bluetooth system, one unit is referred to as the master, which in this case is most likely the BTS 24, while the other units are referred to as slaves. Each Bluetooth TRX 50 and 60-63 applies a time-division duplex (TDD) scheme, so that in the normal connection mode, the master (BTS 24) starts transmitting on the even numbered time slots, while the slaves (external device 31) start transmitting on the odd numbered time slots. Information is transmitted between the BTS 24 and the external device 31 in the form of packets, with each packet being transmitted on a different hop frequency. A packet normally covers a single time slot, but can be extended to cover up to five time slots. To enable the new external device 31 to determine which packets apply to it, the active member address for that new external device 31 is included in all packets sent directly to the external device 31 by the BTS 24.

When the BTS 24 wants to send a message to the new external device 31, the BTS 24 pages the external device 31 by transmitting the device access code (DAC) of the external device 31 (step 320). The DAC is a code derived from the external device's 31 unique 48-bit Bluetooth device address. When the external device 31 detects it's DAC, the external device 31 sends a response message to the BTS 24, including the DAC of the external device 31 (step 330) .

Thereafter, the BTS 24 and the external device 31 exchange vital information to initiate connection setup (step 340). For example, to communicate, the BTS 24 and the external device 31 must both use the same channel access code (CAC) and the same channel hopping sequence. The CAC and the channel hopping sequence are typically derived from the Bluetooth device address of the BTS 24. In addition, the clocks of both the BTS 24 and the external device 31 must be synchronized.

Once a connection is established, information packets can be sent between the BTS 24 and the external device 31 (step 350). Typically, the BTS 24 will begin by sending a packet in an even numbered time slot on a certain hop frequency. The packet can cover one time slot or up to five time slots. Each subsequent packet is transmitted on a different hop frequency. Response packets from the external device 31 are transmitted to the BTS 24 starting on an odd numbered time slot in the same hopping sequence.

With reference now to FIGURE 3B of the drawings, if the BTS 24 and external device 31 are not involved in a connection, the BTS 24 will place the external device 31 in park mode, remove the active member address and assign a parked member address to the external device 31 (step 360).

If, at a later time, the parked external device 31 wants to transmit information to the BTS 24, the external device 31 can initiate the connection by transmitting an access request message to the BTS 24 (step 370). In response to receiving the access request message, the BTS 24 assigns an active member address to the external device 31 and sends an unpark message, including the active member address, to the external device 31 (step 380).

Thereafter, the BTS 24 and the external device 31 exchange the necessary information to initiate connection setup (step 390), as discussed above. Once a connection is established, information packets can be sent between the BTS 24 and the external device 31 (step 395), as discussed above.

It should be understood that embodiments of the present invention can be applied to any type of cellular network, including, but not limited to GSM, CDMA, UMTS and Time-Division Multiple Access (TDMA) system, Personal Communications System (PCS), Advanced Mobile Phone System (AMPS), Digital-AMPS (D-AMPS) or any other type of cellular network.

## Claims

1. A base station within a cellular network, said base station being in communication with at least one external device, said base station comprising:
a transceiver adapted to wirelessly send and receive messages in a short range wireless network to and from said at least one external device;
**characterized by** further comprising
a first adapter configured to determine an address for said at least one external device, said messages sent to said at least one external device including said address; and
a second adapter configured to convert said messages between a protocol associated with said short range network and a protocol associated with said cellular network.

2. The base station of Claim 1, wherein said short range wireless network is the Bluetooth network.

3. The base station of Claim 2, wherein said first adapter is a Bluetooth adapter, said second adapter being a network adapter.

4. The base station of Claim 3, wherein said network adapter converts said messages between said protocol associated with said Bluetooth network and said protocol associated with an interface to a controller within said cellular network.

5. The base station of Claim 4, wherein said interface is the Global System for Mobile communications Abis interface, said controller being a Base Station Controller.

6. The base station of Claim 4, wherein said interface is the Universal Mobile Telecommunications System Iub interface, said controller being a Radio Network Controller.

7. The base station of Claim 1, wherein said transceiver receives said messages on a physical layer, said first adapter converting said messages received on said physical layer into messages used on a higher layer.

8. The base station of Claim 1, wherein said first adapter is configured to determine the type of said at least one external device.

9. A wireless telecommunications system, comprising:
at least one external device having a transceiver adapted to send and receive messages in a short range wireless network and a short range adapter for converting said messages between a protocol associated with said short range network and a protocol associated with said at least one external device; and
a base station having a transceiver adapted to wirelessly send and receive said messages over said short range wireless network to and from said at least one external device, **characterized by** further comprising a first adapter configured to determine an address for said at least one external device, said messages sent to said at least one external device including said address, and a second adapter configured to convert said messages between a protocol associated with said short range network and a protocol associated with said wireless telecommunications system.

10. The wireless telecommunications system of Claim 9, wherein said at least one external device includes at least one of an active antenna, a tower mounted amplifier or an operation and maintenance terminal.

11. The wireless telecommunications system of Claim 9, wherein said short range wireless network is the Bluetooth network.

12. The wireless telecommunications system of Claim 11, wherein said first adapter is a Bluetooth adapter, said second adapter being a network adapter.

13. The wireless telecommunications system of Claim 12, further comprising:
a controller connected to said base station via an interface, said network adapter converting said messages between said protocol associated with said Bluetooth network and said protocol associated with an interface to said controller.

14. The wireless telecommunications system of Claim 13, wherein said interface is the Global System for Mobile communications Abis interface, said controller being a Base Station Controller.

15. The wireless telecommunications system of Claim 13, wherein said interface is the Universal Mobile Telecommunications System Iub interface, said controller being a Radio Network Controller.

16. The wireless telecommunications system of Claim 9, wherein said transceiver of said base station receives said messages on a physical layer, said first adapter converting said messages received on said physical layer into messages used on a higher layer.

17. The wireless telecommunications system of Claim 9, wherein said first adapter is configured to determine the type of said at least one external device.

18. A method for wirelessly connecting at least one external device to a base station within a cellular network, said at least one external device being wirelessly connected to said base station over a short range wireless network, said method comprising the steps of:
registering said at least one external device with said base station over said short range wireless network, **characterized by** further comprising said at least one external device and said base station having a respective transceiver and short range adapter therein for communicating over said short range wireless network, said base station having a network adapter therein for communicating with said cellular network; and
assigning an address to said at least one external device by said short range adapter within said base station.

19. The method of Claim 18, wherein said short range wireless network is the Bluetooth network, said address being an active member address, and further comprising the steps of:
paging said at least one external device using said active member address;
establishing a connection between said at least one external device and said base station over said short range wireless network; and
transmitting messages between said base station and said at least one external device using said respective transceivers and short range adapters.

20. The method of Claim 19, wherein said step of transmitting further comprises the steps of:
receiving said messages by said transceiver of said base station on a physical layer; and
converting, by said short range adapter within said base station, said messages received on said physical layer into messages used on a higher layer.

21. The method of Claim 19, wherein said step of transmitting further comprises the step of:
converting, by said short range adapter within said at least one external device, said messages between a protocol associated with said short range network and a protocol associated with said at least one external device

22. The method of Claim 19, further comprising the step of:
transmitting said messages to said cellular network using said network adapter.

23. The method of Claim 22, wherein said step of transmitting said messages to said cellular network further comprises the steps of:
converting said messages between a protocol associated with said short range wireless network and a protocol associated with an interface to a controller within said cellular network.

24. The method of Claim 18, wherein said short range wireless network is the Bluetooth network, said address being a parked member address, and further comprising the steps of:
transmitting an access request message including said parked member address from said at least one external device to said base station;
assigning an active member address to said at least one external device by said short range adapter within said base station;
sending an unpark message including said active member address from said base station to said at least one external device;
establishing a connection between said base station and said at least one external device over said short range wireless network; and
transmitting messages between said base station and said at least one external device using said respective transceivers and short range adapters.

25. The method of Claim 24, further comprising the step of:
transmitting said messages to said cellular network using said network adapter.

26. The method of Claim 18, further comprising the step of:
determining the type of said at least one external device by said short range adapter within said base station.

## Patentansprüche

1. Basisstation in einem zellularen Netzwerk, wobei die Basisstation mit mindestens einer externen Vorrichtung in Kommunikation steht, wobei die Basisstation umfaßt:
einen Senderempfänger, der geeignet ist, Nachrichten in einem drahtlosen Nahbereichsnetzwerk an und von mindestens einer externen Vorrichtung drahtlos zu senden bzw. zu empfangen;
**dadurch gekennzeichnet, daß** sie ferner umfaßt:
einen ersten Adapter, der so konfiguriert ist, daß eine Adresse für die mindestens eine externe Vorrichtung bestimmt wird, wobei die Nachrichten, die an die mindestens eine externe Vorrichtung gesendet werden, die Adresse aufweisen; und
einen zweiten Adapter, der so konfiguriert ist, daß die Nachrichten zwischen einem Protokoll, das dem Nahbereichsnetzwerk zugeordnet ist, und einem Protokoll, das dem zellularen Netzwerk zugeordnet ist, konvertiert werden.

2. Basisstation nach Anspruch 1, wobei das drahtlose Nahbereichsnetzwerk das Bluetooth-Netzwerk ist.

3. Basisstation nach Anspruch 2, wobei der erste Adapter ein Bluetooth-Adapter ist, wobei der zweite Adapter ein Netzwerkadapter ist.

4. Basisstation nach Anspruch 3, wobei der Netzwerkadapter die Nachrichten zwischen dem Protokoll, das dem Bluetooth-Netzwerk zugeordnet ist, und dem Protokoll, das einer Schnittstelle zu einer Steuereinrichtung in dem zellularen Netzwerk zugeordnet ist, konvertiert.

5. Basisstation nach Anspruch 4, wobei die Schnittstelle die Abis-Schnittstelle des Globalen Systems für Mobilkommunikation ist, wobei die Steuereinrichtung eine Basisstationssteuereinrichtung ist.

6. Basisstation nach Anspruch 4, wobei die Schnittstelle die Iub-Schnittstelle des Universellen Mobilfunk-Telekommunikationssystems ist, wobei die Steuereinrichtung eine Funknetzwerk-Steuereinrichtung ist.

7. Basisstation nach Anspruch 1, wobei der Senderempfänger die Nachrichten auf einer Bitübertragungsschicht empfängt, wobei der erste Adapter die Nachrichten, die auf der Bitübertragungsschicht empfangen werden, in Nachrichten, die auf einer höheren Schicht verwendet werden, konvertiert.

8. Basisstation nach Anspruch 1, wobei der erste Adapter so konfiguriert ist, daß der Typ der mindestens einen externen Vorrichtung bestimmt wird.

9. Drahtloses Telekommunikationssystem mit:
mindestens einer externen Vorrichtung mit einem Senderempfänger, der geeignet ist, Nachrichten in einem drahtlosen Nahbereichsnetzwerk zu senden und zu empfangen, und einem Nahbereichsadapter zum Konvertieren der Nachrichten zwischen einem Protokoll, das dem Nahbereichsnetzwerk zugeordnet ist, und einem Protokoll, das der mindestens einen externen Vorrichtung zugeordnet ist; und
einer Basisstation mit einem Senderempfänger, der geeignet ist, Nachrichten über das drahtlose Nahbereichsnetzwerk an und von der mindestens einen externen Vorrichtung drahtlos zu senden bzw. zu empfangen,
**dadurch gekennzeichnet, daß** diese ferner einen ersten Adapter umfaßt, der so konfiguriert ist, daß eine Adresse für die mindestens eine externe Vorrichtung bestimmt wird, wobei die Nachrichten, die an die mindestens eine externe Vorrichtung gesendet werden, diese Adresse aufweisen, und einen zweiten Adapter, der so konfiguriert ist, daß die Nachrichten zwischen einem Protokoll, das dem Nahbereichsnetzwerk zugeordnet ist, und einem Protokoll, das dem drahtlosen Telekommunikationssystem zugeordnet ist, konvertiert werden.

10. Drahtloses Telekommunikationssystem nach Anspruch 9, wobei die mindestens eine externe Vorrichtung mindestens eines aufweist, nämlich eine aktive Antenne, einen Antennenvorverstärker und/oder ein Bedienungs- und Wartungsendgerät.

11. Drahtloses Telekommunikationssystem nach Anspruch 9, wobei das drahtlose Nahbereichsnetzwerk das Bluetooth-Netzwerk ist.

12. Drahtloses Telekommunikationssystem nach Anspruch 11, wobei der erste Adapter ein Bluetooth-Adapter ist, wobei der zweite Adapter ein Netzwerkadapter ist.

13. Drahtloses Telekommunikationssystem nach Anspruch 12, ferner mit:
einer Steuereinrichtung, die mit der Basisstation über eine Schnittstelle verbunden ist, wobei der Netzwerkadapter die Nachrichten zwischen dem Protokoll, das dem Bluetooth-Netzwerk zugeordnet ist, und dem Protokoll, das einer Schnittstelle mit der Steuereinrichtung zugeordnet ist, konvertiert.

14. Drahtloses Telekommunikationssystem nach Anspruch 13, wobei die Schnittstelle die Abis-Schnittstelle des Globalen Systems für Mobilkommunikation ist, wobei die Steuereinrichtung eine Basisstationssteuereinrichtung ist.

15. Drahtloses Telekommunikationssystem nach Anspruch 13, wobei die Schnittstelle die Iub-Schnittstelle des universellen Mobilfunk-Telekommunikationssystems ist, wobei die Steuereinrichtung eine Funknetzwerksteuereinrichtung ist.

16. Drahtloses Telekommunikationssystem nach Anspruch 9, wobei der Senderempfänger der Basisstation die Nachrichten auf einer Bitübertragungsschicht empfängt, wobei der erste Adapter die Nachrichten, die auf der Bitübertragungsschicht empfangen werden, in Nachrichten, die auf einer höheren Schicht verwendet werden, konvertiert.

17. Drahtloses Telekommunikationssystem nach Anspruch 9, wobei der erste Adapter so konfiguriert ist, daß der Typ der mindestens einen externen Vorrichtung bestimmt wird.

18. Verfahren zum drahtlosen Verbinden mindestens einer externen Vorrichtung mit einer Basisstation in einem zellularen Netzwerk, wobei die mindestens eine externe Vorrichtung mit der Basisstation über ein drahtloses Nahbereichsnetzwerk drahtlos verbunden ist, wobei das Verfahren die folgenden Schritte umfaßt:
Anmelden der mindestens einen externen Vorrichtung bei der Basisstation über das drahtlose Nahbereichsnetzwerk, **dadurch gekennzeichnet, daß** ferner die mindestens eine externe Vorrichtung und die Basisstation einen jeweiligen Senderempfänger und Nahbereichsadapter zum Kommunizieren über das drahtlose Nahbereichsnetzwerk aufweisen, wobei die Basisstation einen Netzwerkadapter zum Kommunizieren mit dem zellularen Netzwerk aufweist; und
Zuweisen einer Adresse an die mindestens eine externe Vorrichtung durch den Nahbereichsadapter in der Basisstation.

19. Verfahren nach Anspruch 18, wobei das drahtlose Nahbereichsnetzwerk das Bluetooth-Netzwerk ist, wobei die Adresse eine Active Member-Adresse ist, und ferner die folgenden Schritte umfaßt:
Rufen der mindestens einen externen Vorrichtung per Funkruf unter Verwendung der Active Member-Adresse;
Herstellen einer Verbindung zwischen der mindestens einen externen Vorrichtung und der Basisstation über das drahtlose Nahbereichsnetzwerk; und
Übertragen von Nachrichten zwischen der Basisstation und der mindestens einen externen Vorrichtung unter Verwendung der jeweiligen Senderempfänger und Nahbereichsadapter.

20. Verfahren nach Anspruch 19, wobei der Schritt des Übertragens ferner die folgenden Schritte umfaßt:
Empfangen der Nachrichten durch den Senderempfänger der Basisstation auf einer Bitübertragungsschicht; und
Konvertieren der Nachrichten, die auf der Bitübertragungsschicht empfangen werden, durch den Nahbereichsadapter in der Basisstation in Nachrichten, die auf einer höheren Schicht verwendet werden.

21. Verfahren nach Anspruch 19, wobei der Schritt des Übertragens ferner den folgenden Schritt umfaßt:
Konvertieren der Nachrichten durch den Nahbereichsadapter in der mindestens einen externen Vorrichtung zwischen einem Protokoll, das dem Nahbereichsnetzwerk zugeordnet ist, und einem Protokoll, das der mindestens einen externen Vorrichtung zugeordnet ist.

22. Verfahren nach Anspruch 19, ferner mit dem folgenden Schritt:
Übertragen der Nachrichten an das zellulare Netzwerk unter Verwendung des Netzwerkadapters.

23. Verfahren nach Anspruch 22, wobei der Schritt des Übertragens der Nachrichten an das zellulare Netzwerk ferner den folgenden Schritt umfaßt:
Konvertieren der Nachrichten zwischen einem Protokoll, das dem drahtlosen Nahbereichsnetzwerk zugeordnet ist, und einem Protokoll, das einer Schnittstelle zu einer Steuereinrichtung in dem zellularen Netzwerk zugeordnet ist.

24. Verfahren nach Anspruch 18, wobei das drahtlose Nahbereichsnetzwerk das Bluetooth-Netzwerk ist, wobei die Adresse eine Parked Member-Adresse ist und ferner die folgenden Schritte umfaßt:
Übertragen einer Zugangsanforderungsnachricht mit der Parked Member-Adresse von der mindestens einen externen Vorrichtung an die Basisstation;
Zuweisen einer Active Member-Adresse an die mindestens eine externe Vorrichtung durch den Nahbereichsadapter in der Basisstation;
Senden einer Unpark-Nachricht mit der Active Member-Adresse von der Basisstation an die mindestens eine externe Vorrichtung;
Herstellen einer Verbindung zwischen der Basisstation und der mindestens einen externen Vorrichtung über das drahtlose Nahbereichsnetzwerk; und
Übertragen von Nachrichten zwischen der Basisstation und der mindestens einen externen Vorrichtung unter Verwendung der jeweiligen Senderempfänger und Nahbereichsadapter.

25. Verfahren nach Anspruch 24, ferner mit dem folgenden Schritt:
Übertragen der Nachrichten an das zellulare Netzwerk unter Verwendung des Netzwerkadapters.

26. Verfahren nach Anspruch 18, ferner mit dem folgenden Schritt:
Bestimmen des Typs der mindestens einen externen Vorrichtung durch den Nahbereichsadapter in der Basisstation.

## Revendications

1. Station de base dans un réseau cellulaire, ladite station de base étant en communication avec au moins un dispositif externe, ladite station de base comprenant:
un émetteur-récepteur qui est adapté pour envoyer et recevoir d'une façon sans fil des messages dans un réseau sans fil à courte portée sur et depuis ledit au moins un dispositif externe,
**caractérisée en ce qu'**elle comprend en outre:
un premier adaptateur qui est configuré pour déterminer une adresse pour ledit au moins un dispositif externe, lesdits messages qui sont envoyés sur ledit au moins un dispositif externe incluant ladite adresse; et
un second adaptateur qui est configuré pour convertir lesdits messages entre un protocole qui est associé audit réseau à courte portée et un protocole qui est associé audit réseau cellulaire.

2. Station de base selon la revendication 1, dans laquelle ledit réseau sans fil à courte portée est le réseau Bluetooth.

3. Station de base selon la revendication 2, dans laquelle ledit premier adaptateur est un adaptateur Bluetooth, ledit second adaptateur étant un adaptateur de réseau.

4. Station de base selon la revendication 3, dans laquelle ledit adaptateur de réseau convertit lesdits messages entre ledit protocole associé audit réseau Bluetooth et ledit protocole associé à une interface sur un contrôleur à l'intérieur dudit réseau cellulaire.

5. Station de base selon la revendication 4, dans laquelle ladite interface est l'interface Abis de communication du système global pour mobile ou GSM, ledit contrôleur étant un contrôleur de station de base.

6. Station de base selon la revendication 4, dans laquelle ladite interface est l'interface Iub de système de télécommunication mobile universel ou UMTS, ledit contrôleur étant un contrôleur de réseau radio.

7. Station de base selon la revendication 1, dans laquelle ledit émetteur-récepteur reçoit lesdits messages sur une couche physique, ledit premier adaptateur convertissant lesdits messages qui sont reçus sur ladite couche physique en des messages qui sont utilisés sur une couche plus élevée.

8. Station de base selon la revendication 1, dans laquelle ledit premier adaptateur est configuré pour déterminer le type dudit au moins un dispositif externe.

9. Système de télécommunication sans fil comprenant:
au moins un dispositif externe qui comporte un émetteur-récepteur qui est adapté pour envoyer et recevoir des messages dans un réseau sans fil à courte portée et un adaptateur à courte portée pour convertir lesdits messages entre un protocole associé audit réseau à courte portée et un protocole associé audit au moins un dispositif externe; et
une station de base qui comporte un émetteur-récepteur qui est adapté pour envoyer et recevoir d'une façon sans fil lesdits messages sur ledit réseau sans fil à courte portée sur et depuis ledit au moins un dispositif externe, **caractérisé en ce qu'**il comprend en outre un premier adaptateur qui est configuré pour déterminer une adresse pour ledit au moins un dispositif externe, lesdits messages envoyés sur ledit au moins un dispositif externe incluant ladite adresse, et un second adaptateur qui est configuré pour convertir lesdits messages entre un protocole qui est associé audit réseau à courte portée et un protocole qui est associé audit système de télécommunication sans fil.

10. Système de télécommunication sans fil selon la revendication 9, dans lequel ledit au moins un dispositif externe inclut au moins un élément pris parmi une antenne active, un amplificateur monté sur tour et un terminal de fonctionnement et de maintenance.

11. Système de télécommunication sans fil selon la revendication 9, dans lequel ledit réseau sans fil à courte portée est le réseau Bluetooth.

12. Système de télécommunication sans fil selon la revendication 11, dans lequel ledit premier adaptateur est un adaptateur Bluetooth, ledit second adaptateur étant un adaptateur de réseau.

13. Système de télécommunication sans fil selon la revendication 12, comprenant en outre:
un contrôleur qui est connecté à ladite station de base via une interface, ledit adaptateur de réseau convertissant lesdits messages entre ledit protocole associé audit réseau Bluetooth et ledit protocole associé à une interface sur ledit contrôleur.

14. Système de télécommunication sans fil selon la revendication 13, dans lequel ladite interface est l'interface Abis de communication du système global pour mobile ou GSM, ledit contrôleur étant un contrôleur de station de base.

15. Système de télécommunication sans fil selon la revendication 13, dans lequel ladite interface est l'interface Iub de système de télécommunication mobile universel ou UMTS, ledit contrôleur étant un contrôleur de réseau radio.

16. Système de télécommunication sans fil selon la revendication 9, dans lequel ledit émetteur-récepteur de ladite station base reçoit lesdits messages sur une couche physique, ledit premier adaptateur convertissant lesdits messages qui sont reçus sur ladite couche physique en des messages qui sont utilisés sur une couche plus élevée.

17. Système de télécommunication sans fil selon la revendication 9, dans lequel ledit premier adaptateur est configuré pour déterminer le type dudit au moins un dispositif externe.

18. Procédé pour connecter d'une façon sans fil au moins un dispositif externe sur une station de base à l'intérieur d'un réseau cellulaire, ledit au moins un dispositif externe étant connecté d'une façon sans fil à ladite station de base sur un réseau sans fil à courte portée, ledit procédé comprenant les étapes de:
enregistrement dudit au moins un dispositif externe avec ladite station de base sur ledit réseau sans fil à courte portée, **caractérisé en ce qu'**il comprend en outre le fait que ledit au moins un dispositif externe et ladite station de base comportent un émetteur-récepteur respectif et un adaptateur à courte portée respectif dedans pour communiquer sur ledit réseau sans fil à courte portée, ladite station de base comportant un adaptateur de réseau dedans pour communiquer avec ledit réseau cellulaire; et
assignation d'une adresse audit au moins un dispositif externe au moyen dudit adaptateur à courte portée à l'intérieur de ladite station de base.

19. Procédé selon la revendication 18, dans lequel ledit réseau sans fil à courte portée est le réseau Bluetooth, ladite adresse étant une adresse de membre actif, et comprenant en outre les étapes de:
recherche de personne dudit au moins un dispositif externe en utilisant ladite adresse de membre actif;
établissement d'une connexion entre ledit au moins un dispositif externe et ladite station de base sur ledit réseau sans fil à courte portée; et
transmission de messages entre ladite station de base et ledit au moins un dispositif externe en utilisant lesdits émetteurs-récepteurs respectifs et lesdits adaptateurs à courte portée respectifs.

20. Procédé selon la revendication 19, dans lequel ladite étape de transmission comprend en outre les étapes de:
réception desdits messages par ledit émetteur-récepteur de ladite station de base sur une couche physique; et
conversion, au moyen dudit adaptateur à courte portée à l'intérieur de ladite station de base, desdits messages qui sont reçus sur ladite couche physique en des messages qui sont utilisés sur une couche plus élevée.

21. Procédé selon la revendication 19, dans lequel ladite étape de transmission comprend en outre l'étape de:
conversion, au moyen dudit adaptateur à courte portée à l'intérieur dudit au moins un dispositif externe, desdits messages entre un protocole qui est associé audit réseau à courte portée et un protocole qui est associé audit au moins un dispositif externe.

22. Procédé selon la revendication 19, comprenant en outre l'étape de:
transmission desdits messages sur ledit réseau cellulaire en utilisant ledit adaptateur de réseau.

23. Procédé selon la revendication 22, dans lequel ladite étape de transmission desdits messages sur ledit réseau cellulaire comprend en outre les étapes de:
conversion desdits messages entre un protocole associé audit réseau sans fil à courte portée et un protocole associé à une interface sur un contrôleur à l'intérieur dudit réseau cellulaire.

24. Procédé selon la revendication 18, dans lequel ledit réseau sans fil à courte portée est le réseau Bluetooth, ladite adresse étant une adresse de membre parqué et comprenant en outre les étapes de:
transmission d'un message de requête d'accès qui inclut ladite adresse de membre parqué depuis ledit au moins un dispositif externe sur ladite station de base;
assignation d'une adresse de membre actif audit au moins un dispositif externe au moyen dudit adaptateur à courte portée à l'intérieur de ladite station de base;
envoi d'un message de non parqué incluant ladite adresse de membre actif depuis ladite station de base sur ledit au moins un dispositif externe;
établissement d'une connexion entre ladite station de base et ledit au moins un dispositif externe sur ledit réseau sans fil à courte portée; et
transmission de messages entre ladite station de base et ledit au moins un dispositif externe en utilisant lesdits émetteurs-récepteurs respectifs et lesdits adaptateurs à courte portée respectifs.

25. Procédé selon la revendication 24, comprenant en outre l'étape de:
transmission desdits messages sur ledit réseau cellulaire en utilisant ledit adaptateur de réseau.

26. Procédé selon la revendication 18, comprenant en outre l'étape de:
détermination du type dudit au moins un dispositif externe au moyen dudit adaptateur à courte portée à l'intérieur de ladite station de base.
